# EUROPEAN PATENT APPLICATION

(11) **EP 2 985 264 A1**
(43) Date of publication of application: **17.02.2016**
(21) Application number: 15250016.1
(22) Date of filing: 13.08.2015
(51) Int. Cl.: C02F 1/46

(54) **ELECTROLYTIC WATER TREATMENT FOR SCALE PREVENTION**

(30) Priority: 13.08.2014 GB 201414375
(71) Applicant: Sentinel Performance Solutions Ltd, Daresbury Warrington Cheshire WA4 4BS (GB)
(72) Inventor: Day, Paul, 2000 Antwerpen (BE); Hock, Jonathan Edmund, Lymm, WA13 9QX (GB)
(74) Representative: Badger, John Raymond

(57) **Abstract**

A method and apparatus for conditioning water, for example to soften hard water, comprises generating ions by applying a DC current to first and second metallic components which are exposed to the flow of water, employing a flow meter to measure the flow rate of water, and varying the level of the DC current as a function of the flow rate of water thereby to maintain substantially constant the concentration of generated ions in the water over at least a part of the range of the variable flow rate of water.

## Description

The present invention relates to treatment of hard water e.g. as a mains water supply or held in storage or in a circulating system. The installation may be e.g. in domestic, commercial or large-scale installations such as hospitals, farms or factories.

The presence of hard water is regarded generally as a disadvantage as it tends to form scale in pipes, containers and heating appliances. The hard water may be temporary hard water containing calcium bicarbonate or permanent hard water containing calcium and/or magnesium salts. Increases in temperature cause deposits of insoluble calcium and/or magnesium salts to form, which can deposit in pipes etc., causing interference with water flow or as insulating layers on heat transfer surfaces which significantly reduce heat transfer efficiency.

There are various known ways of dealing with this problem and one is an electrolytic means by the use of a copper supply pipe as a cathode and an additional zinc component acting as an anode which may together be in direct contact or spaced apart, electrically connected either directly or via any electrical conductor and in contact with the water flow. The influence of the water flow between the dissimilar metals completes a 'galvanic couple' circuit through which a current flows. In such non-polarising conditions the magnitude of this current may be regarded as constant as long as the relative surface areas of the anode and cathode remain largely constant and the conductivity of the water is above a limiting threshold, in which case the current is determined by the difference in natural electrode potential between the copper and zinc under such conditions and can be referred to as 'galvanic'. Oxidation occurs at the anode in a galvanic cell and in this case zinc is oxidised to yield Zn²⁺ ions into the water flow at a constant rate. Zinc ions interfere with the formation of calcium and magnesium salt crystals and these 'hardness' salts are held in solution or suspension, or precipitate as aragonite rather than calcite which is not as tenaciously adherent to surfaces. The resulting electrolytic effect can reduce hard water scaling.

The concentration of zinc ions that is efficacious in controlling formation of scale has been reported to be determined by a Zn/Ca mass ratio of 0.06 x 10⁻³ which suggests that only 10 x 10⁻³ mg/l of electrolytically generated zinc would be required to affect CaCO₃ formation, though in practice greater than 20 x 10⁻³ mg/l of electrolytically generated zinc in the bulk water is required for significant control and typically 50 to 270 x 10⁻³ mg/l for optimum control.

Whilst the known method does have some effectiveness, it has limitations in that whilst electrolytic zinc is generated at (effectively) constant rate, water flow in most installations is variable and therefore zinc ions become diluted to varying extents as a function of water flow, being rendered to low concentrations during periods of high flow and to high concentrations in low flow or static flow conditions.

For some installations where water flow is generally high, the amount of zinc ions that can be generated by relying solely on the natural galvanic current is not sufficient to attain a concentration in the water which would lead to significant scale control. Therefore some electrolytic scale control devices are designed such that an increased voltage (i.e. greater than the natural galvanic voltage difference) is applied to the circuit, driven by an external power source. In this way a higher constant rate of zinc ions is generated per unit time and an efficacious concentration in the water flow achieved.

Notwithstanding, in low or static flow conditions water flow across the anode surface tends to be laminar, allowing zinc ions to accumulate to high concentrations in a boundary layer between the zinc anode surface and the bulk water. Equilibrium model simulations have identified the conditions favourable for the formation of hydrozincite [Zn₅(CO₃)₂(OH)₆] and smithsonite [ZnCO₃] and under the physico-chemical conditions of waters typically treated by electrolytic devices, saturation and precipitation of these minerals occurs at concentrations as low as 100 x 10⁻³ mg/l. Thus, in low or static water flow conditions, particularly in powered devices, zinc cations and anions in the hard water readily attain concentrations which exceed the solubilities of these minerals which then precipitate as a deposit on the anode which blinds the anode and leads to inactivation of the electrolytic device.

In summary, an electrolytic device is most efficacious in controlling scale formation if it yields zinc ions such that the bulk concentration is always achieved between 50 and 270 x 10⁻³ mg/l but that concentrations above 100 x 10⁻³ mg/l are not attained in the boundary layer in contact with the zinc anode surface.

An object of this invention is to provide a descaling water treatment system which is highly effective against hard water, gives a consistent, continuous and efficacious water treatment as a function of water flow over long periods, is much less prone to anode inactivation caused by mineral deposits, has a wider range of applications and is cost-effective.

The present invention seeks to provide an improved method of and apparatus for the treatment of water.

In accordance with one aspect of the present invention a method of treating water comprises:-
providing a container through which water flows, said container comprising or containing a first metallic component and comprising or containing a second metallic component which second metallic component is higher in the electro-chemical series than the first metallic component, the first and second metallic components being positioned to define at least in part a path through which the water flows to complete a natural galvanic circuit wherein the first metallic component forms the cathode and the second metallic component forms the anode of the circuit,
providing a control circuit connected to said first and second metallic components and comprising a current control means,
providing an electrical supply means and arranging said electrical supply means to supply a DC current to said first and second metallic components via said control circuit,
providing a water flow rate sensor, and
employing said current control means to control the DC current in said control circuit as a function of water flow rate.

In accordance with another aspect of the present invention apparatus for treating water comprises:-
a container through which water flows, the container comprising or containing a first metallic component and comprising or containing a second metallic component which second metallic component is higher in the electrochemical series (more negative Standard Electrode Potential) than the first metallic component, the first and second metallic components in use defining at least in part a path through which the water flows to complete a natural galvanic circuit wherein the first metallic component forms the cathode and the second metallic component forms the anode of the circuit,
a control circuit connected to said first and second metallic components and comprising a current control means,
an electrical supply means for supply of a DC current to said first and second metallic components via said control circuit,
a water flow rate sensor to measure the water flow rate over said first and second metallic components, and
communication means for communication of each of said electrical supply means and water flow rate sensor with the current control means, said current control means being operable to control the DC current supply in said control circuit as a function of the water flow rate.

Thus the present invention teaches that the current flow through the galvanic circuit is to be varied as a function of the water flow rate, thereby yielding a more preferable quantity of ions, such as zinc ions, into the water than would be achieved solely by galvanic action, and with the rate of yield being a function of the water flow rate. That is, there may be achieved an ion concentration that more closely approximates to or equals a target ion concentration that is within the most efficacious bulk-concentration range referred to above.

Although reference is made herein to the generation of zinc ions. It is to be understood that the invention may be applied to a method and an apparatus which involves the generation of other ions.

The galvanic circuit or each of the galvanic and control circuits may comprise a third component which may be metallic or non-metallic and which is more electropositive than the second metallic component, the second and third components defining a path through which the water flows to complete an additional natural galvanic circuit wherein the third component forms the cathode and the second component forms the anode of the circuit, the third component being electrically isolated from the first metallic component.

Accordingly the second metallic component, being the most electro-negative component, serves as the anode for both the circuit containing the first metallic component and also, separately, the circuit containing the third component.

The water flow rate sensor may be of a type which measures volume flow rate. Alternatively it may be of a type which measures the flow velocity.

The current control means or other components of the apparatus may comprise a conversion means for use in arrangements in which it receives water flow rate data related to the flow velocity. That conversion means may be employed to convert the flow velocity to volume flow rate for a water flow path of a constant, known cross-sectional area.

The current control means may be operable to control the current in a manner in which the current is a linear or a non-linear function of the volume flow rate of water over at least a part of the range of variable flow rate through the apparatus.

The DC current may be supplied via the control circuit from the electrical supply means only when the volume flow rate of the water increases to above a pre-determined level, thereby retaining an efficacious concentration of zinc ions in the water flow. That is, at low flow rate the generation of ions is determined solely by galvanic action, thereby avoiding conditions conducive to mineral deposition and anode de-activation such as might occur if a DC current was applied to add to the natural galvanic current At low flow rates

Accordingly the current control means optionally may be of a type which switches the DC supply on and off as a function of volume flow rate.

The water flow rate level at which the DC current is predetermined to switch on preferably is the flow rate level above which the concentration of zinc ions in the bulk water would otherwise be too dilute to be optimally efficacious. This can be expected to improve the efficiency of the apparatus and cater for variations in water flow rate which often occur in water supply installations.

Alternatively a DC current may be applied via the control circuit at volume flow rates which are both above and below that level at which the generation of (e.g. zinc) ions by natural galvanic action generally is regarded as sufficient. The invention teaches that the generation of ions may be controlled also at low flow rates and preferably is controlled to be a function of the low flow rate. This may be achieved by providing that the anode and cathode are not in direct contact, thereby suppressing the natural generation of ions by natural galvanic action. Instead the anode and cathode are arranged as part of a control circuit comprising a high impedance component, such as a resistor, which interconnects the cathode and anode, with the circuit being completed by the conductivity of the water. That impedance thus serves to suppress the generation of ions by natural galvanic action and the application of the DC power supply across that impedance as a function of the level of the flow rate facilitates an improved control of the rate of ion generation. Thus there is an enhanced ability to avoid conditions conducive to mineral deposition and anode de-activation.

The DC power may be applied across a resistor having a resistance in the range 1 to 10,000 ohm, more preferably in the range 10 to 3000 ohm.

Examples of suitable flow rate devices include an in-line paddle flow switch or similar deflection device, a thermal flow switch or a differential water pressure switch detecting pressure drop across the electrolytic device.

Preferably the zinc ion generation and water flow rate are correlated always to ensure a substantially constant concentration of zinc ions in the treated water irrespective of the flow rate.

Use may be made of :-
(a) an electrical signal from the water flow meter, whose magnitude depends upon rate of flow, being used to control the magnitude of the DC current fed to the anode/cathode galvanic circuit such that the level of electrolytic zinc ion generation is variable as a function of that flow and always ensures a substantially constant and efficacious concentration of zinc ions in the bulk water;
(b) a paddle wheel in the water flow which turns at a rate proportional to the water flow rate and which itself turns a dynamo motor to induce a DC current which is fed directly to the anode/cathode circuit. The magnitude of the current, though not its variation may be modulated by electrical circuitry to ensure that the range of magnitude yields an appropriate zinc ion concentration as a function of water flow.

A preferred method and apparatus utilises a water flow rate meter which provides a pulse signal at time intervals which are directly a function of the volume flow rate of water.

The current control means, also referred to herein as a "controller", may be arranged to monitor the water meter pulse interval in real time and calculate an associated flow rate in litres per minute.

The controller may be adapted automatically to adjust the current setting to suit the derived flow rate value, for example in a directly proportional manner.

The controller may be adapted to have a default setting to deliver a current in the order of 0.5 to 2.0, and more preferably 1 mA per l/min of water flow. Accordingly for a flow rate of 8 l/min, the controller would deliver 8mA.

Although the water meter may be calibrated or otherwise arranged to deliver one pulse per prescribed volume flow, e.g. one pulse per 0.25 litres, adjustment means may be provided thereby to take into account specific system variables and ensure that the apparatus operates to deliver an appropriate DC current in the control circuit. Preferably the adjustment facility allows an adjustment of between 1 and 10 pulses per litre.

Preferably the controller incorporates means for varying the ratio between the DC current and flow rate. Thus, for example, it may be necessary for the controller to deliver only 0.7 mA per l/min of flow.

A suitable adjustment range is from 0.5 mA to 2.0 mA per l/min, and preferably in 0.1 increments.

A controller may be adapted to result in a DC current only if the calculated current value, as derived from flow rate is greater than a pre-determined current value, for example 1 mA. Thus if the calculated value is less than 1 mA the controller operates to result in only a galvanic mode of operation.

For a controller that measures timing of the pulse interval on a real time basis, at the end of each interval, in the instant that it receives the latest pulse, the controller may be arranged to calculate (i) the latest flow rate and (ii) the necessary current level. That current level should be delivered to the control circuit, but preferably only if the calculated current level is greater than a pre-determined level below which the galvanic mode of operation is sufficient.

Accordingly, to protect the anode during static or low flow situations the controller preferably is arranged to ensure that a DC current is not supplied from the electrical supply whenever the pulse interval is significantly longer than the preceding one, thus ensuring that operation of the system reverts to that of the galvanic mode.

Whether or not the controller interprets the pulse interval as being significantly longer than a preceding one may be controlled by a pre-set threshold value, which may be expressed as a percentage. Thus a threshold value of 150% would result in the controller allowing an interval period of 150% of the preceding interval before switching to galvanic mode. With a threshold setting of 150% a steady flow rate of 15 litres per minute, i.e. 1 pulse per second in the case of a calibration of one pulse per 0.25 litres, the controller would only react (for example by switching the system to a galvanic mode) when the pulse interval exceeds 1.5 seconds.

The aforementioned threshold may be adjustable during initial system set up. Preferably the adjustable threshold range is in the range 100 to 1000 %.

One embodiment of the present invention will now be described, by way of example, with reference to the accompanying drawings in which:-
Figure 1 shows schematically a water supply system incorporating apparatus of the present invention, and
Figure 2 is a graph of an example of the rate of zinc loss in relation to current flow.

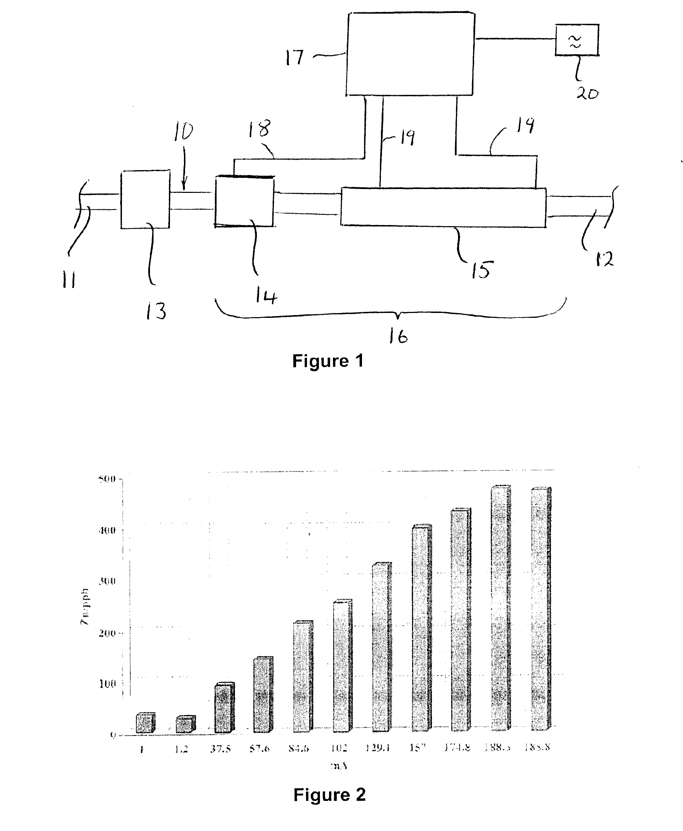

The system shown in Figure 1 comprises a supply pipe 10 having an inlet end 11 through which water flows to the so-called water conditioning apparatus 16 of the present invention, and an outlet end 12 from which treated water issues. Downstream of a filter 13 the pipe 10 is provided with a water flow rate meter 14 which in turn is followed by an anode unit 15 comprising cathode and anode sections.

A controller 17 receives flow rate information from the water meter 14 via connection 18 and employs that information to control an electrical supply to deliver an appropriate DC current to the anode unit via the connection 19. In this embodiment the controller incorporates a rectifier whereby an AC supply from a conventional single phase 240 volt supply 20 is rectified to provide a DC supply, that rectifier being incorporated within the body of the controller 17.

In this embodiment of the invention the anode unit comprises a copper cathode and a smaller zinc anode. The anode and cathode are not in direct electrical contact but are interconnected within the controller via a high resistance resistor of 2000 ohm. The DC current is applied across that resistor and therefore results in a current flow between the anode and cathode to generate zinc ions when the electrical circuit is completed by the presence of water in the pipe 10. Thus there results a controlled generation of ions at a rate appropriate to the water flow rate at both low and higher flow rates.

Test undertaken with this apparatus operating at a constant water flow rate of 10 litres per minute resulted in the zinc loss to current relationship shown in Figure 2. This relationship is broadly in line with Faraday's equation (taking into account relative electrode surface areas). By inference this result demonstrates that varying current to match flow would generate constant zinc loss. For example, from the graph it can be seen that approximately doubling the impressed current from say 84.6mA to 157mA, or from 57.6mA to 102mA in each case approximately doubles the amount of generated zinc into a water flow of 10L.min. It clearly follows that the unit operating at say 84.6mA on a 10 L/min water flow rate will provide approximately the same concentration of zinc ions in the water if it were to operate at 157mA in a water flow of 20 L/min.

Although not specifically described in the context of the embodiment of Figure 1 it is to be understood that the controller and other components of the system of Figure 1 may incorporate detailed features such as those more generally described herein in the description preceding the first embodiment.

A further feature which may be incorporated in the apparatus of the present invention or employed in other water treatment installations is the provision of means for promoting turbulent flow through the anode unit. The advantage of providing or promoting turbulent flow is that it reduces the occurrence of laminar flow across the anode surface, thereby reducing the possibility that concentrations of mineral-forming ions could exceed saturation point and precipitate as deposits of the anode. The means for promoting turbulence could be by virtue of the geometry of one or both metallic components. For example one or both metallic components could have protrusions e.g. one or more vanes, fins or pins. Another possibility is to have one or both metallic components having grooves, pits or indentations of regular or irregular shape. A further possibility is to have the anode fabricated from a zinc wire or wire mesh and compacted to form a highly porous but irregular cross-section.

For clarity the invention has been described in terms of using copper as the cathode (optionally lead, silver or graphite as an additional, secondary cathode), and zinc as the anode. Whilst copper and zinc are the preferred materials for the 'primary' cathode and the anode respectively, the inventions are not limited to them. The cathode(s) may be pure or as an alloy and may be plated. For example where a cathode is copper it may be plated e.g. with chrome, provided that there is surface copper exposed to the water to be treated. The anode may be pure or as an alloy.

A cathode may itself form the structural casing of the unit or it may be contained within it. Where a secondary cathode is also incorporated, either cathode may form the casing, or both may be contained within it so that the casing of the unit, whether there is a single cathode or both a primary and secondary cathode, may be of e.g. a plastic material.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable combination.

## Claims

1. A method of treating water comprising:-
providing a container through which water flows, said container comprising or containing a first metallic component and comprising or containing a second metallic component which second metallic component is higher in the electro-chemical series than the first metallic component, the first and second metallic components being positioned to define at least in part a path through which the water flows to complete a natural galvanic circuit wherein the first metallic component forms the cathode and the second metallic component forms the anode of the circuit,
providing a control circuit connected to said first and second metallic components and comprising a current control means,
providing an electrical supply means and arranging said electrical supply means to supply a DC current to said first and second metallic components via said control circuit,
providing a water flow rate sensor, and
employing said current control means to control the DC current in said control circuit as a function of water flow rate.

2. A method according to claim 1 wherein the control circuit is operable to vary the ratio between the DC current and the water flow rate.

3. A method according to claim 1 or claim 2 and comprising use of a water flow rate meter which provides a pulse signal at time intervals which are a function of the volume flow rate of water.

4. A method according to any one of the preceding claims wherein the current control means is employed to control the current in a manner in which the DC current is a predetermined linear or non-linear function of the volume flow rate of water over at least the part of the range of variable flow rate of water through the container.

5. A method according to any one of the preceding claims wherein DC current is supplied via the control circuit to the first and second metallic components only when the volume flow rate of the water increases to above a predetermined level.

6. A method according to any one of claims 1 to 4 wherein the control circuit is employed to suppress the natural generation of ions by galvanic action.

7. A method according to claim 6 wherein a DC current is supplied to the first and second metallic components as a function of water flow rate irrespective of whether the flow rate is above or below a predetermined level.

8. Apparatus for treating water comprising:-
a container (10) through which water flows, the container comprising or containing a first metallic component and comprising or containing a second metallic component which second metallic component is higher in the electrochemical series (more negative Standard Electrode Potential) than the first metallic component, the first and second metallic components (15) in use defining at least in part a path through which the water flows to complete a natural galvanic circuit wherein the first metallic component forms the cathode and the second metallic component forms the anode of the circuit,
a control circuit connected to said first and second metallic components and comprising a current control means (17),
an electrical supply means (20) for supply of a DC current to said first and second metallic components via said control circuit,
a water flow rate sensor (14) to measure the water flow rate over said first and second metallic components, and
communication means (18,19) for communication of each of said electrical supply means (20) and water flow rate sensor (14) with the current control means, said current control means being operable to control the DC current supply in said control circuit as a function of the water flow rate.

9. Apparatus according to claim 8 wherein the current control means comprises means for varying the ratio between the DC current and water flow rate.

10. Apparatus according to claim 8 or claim 9 wherein the water flow rate sensor provides a pulse signal at time intervals which are a function of the volume flow rate of water, and the current control means adjusts the DC current as a function of the water flow rate sensor pulse interval.

11. Apparatus according to any one of claims 8 to 10 wherein the control circuit supplies a DC current only when the water volume flow rate is above a predetermined level.

12. Apparatus according to any one of claims 8 to 10 wherein the control circuit supplies a DC current at volume flow rates which are both above and below that flow rate below which the generation of ions by natural galvanic action is sufficient for conditioning of the water.

13. Apparatus according to claim 12 wherein the first and second metallic components (15) are not in direct contact and are components of an electrical circuit comprising the current control means (17,19), and with the circuit completed by conductivity of water in the container.

14. Apparatus according to claim 13 wherein the control circuit comprises a high impedance component between the first and second metallic components and wherein the DC supply is applied across said high impedance component.

15. Apparatus according to any one of claims 8 to 14 wherein the current control means is operable to control the DC current in a manner in which the current is a predetermined linear or non-linear function of volume flow rate of water over at least a part of the range of variable flow rate of water through the container.
